# EUROPÄISCHE PATENTSCHRIFT

(11) **EP 1 336 053 B1**
(45) Veröffentlichungstag und Bekanntmachung des Hinweises auf die Patenterteilung: **13.10.2004**
(21) Anmeldenummer: 01997653.9
(22) Anmeldetag: 21.11.2001
(51) Int. Cl.: F16D 27/112, F16D 67/06

(54) **VORRICHTUNG ZUM FÜHREN EINES ANTRIEBSMOMENTES**
DEVICE FOR GUIDING A DRIVING TORQUE
DISPOSITIF DE GUIDAGE D'UN COUPLE D'ENTRAINEMENT

(30) Priorität: 23.11.2000 DE 10058199
(43) Veröffentlichungstag der Anmeldung: 20.08.2003
(73) Patentinhaber: ZF FRIEDRICHSHAFEN Aktiengesellschaft, 88038 Friedrichshafen (DE)
(72) Erfinder: SCHNEIDER, Rudolf, 88074 Meckenbeuren (DE); GAZYAKAN, Ünal, 88045 Friedrichshafen (DE); BAASCH, Detlef, 88048 Friedrichshafen (DE); GUMPOLTSBERGER, Gerhard, 88045 Friedrichshafen (DE); EBENHOCH, Michael, 88045 Friedrichshafen (DE); SCHMOHL, Barbara, 88048 Friedrichshafen (DE)
(86) Internationale Anmeldenummer: PCT/EP2001/013502
(87) Internationale Veröffentlichungsnummer: WO 2002/042657

(56) Entgegenhaltungen:
- EP-A- 0 341 653
- DD-A- 266 624
- US-A- 2 946 418
- US-A- 4 498 066

## Beschreibung

Die Erfindung betrifft eine Vorrichtung zum Führen eines Momentes von einer mit einer Antriebseinrichtung verbundenen Antriebswelle auf eine erste oder eine zweite Ausgangswelle.

Vorrichtungen zum Führen eines Antriebsmomentes sind beispielsweise aus der Praxis der Getriebetechnologie bekannt, wo es häufig gilt, zwei Abtriebswellen abwechselnd anzutreiben. Hierzu werden in der Regel zwei Maschinen, wie beispielsweise Elektromotoren, eingesetzt, mittels denen jeweils eine der Abtriebswellen betätigbar ist und welche von einer elektronischen Steuereinrichtung derart angesteuert werden, daß zur sequentiellen Betätigung der Wellen jeweils nur eines der Antriebsaggregate aktiv ist.

Nachteilhafterweise erfordert der Einsatz zweier Antriebsaggregate für zwei Abtriebswellen jedoch einen hohen Bauraumbedarf, welcher bei beengten Bauraumverhältnissen, wie z.B. in der Regel bei Getrieben von Kraftfahrzeugen herrschen, problematisch ist.

Aufgabe der vorliegenden Erfindung ist es daher, eine Vorrichtung zum Führen eines Momentes auf eine oder zwei Abtriebswellen zur Verfügung zu stellen, welche einen einfachen Aufbau und einen geringen Bauraumbedarf aufweist, und deren Wirkungsweise über eine einfache Steuerung realisierbar ist.

Erfindungsgemäß wird diese Aufgabe mit den im Patentanspruch 1 genannten Merkmalen gelöst.

Mit der erfindungsgemäßen Vorrichtung zum Führen eines Antriebsmomentes, bei der ein Kraftfluß zwischen der Antriebswelle und der ersten oder der zweiten Abtriebswelle über ein mit der Antriebswelle drehfest verbundenes Koppelelement der elektromagnetischen Kupplung herstellbar ist, wird in vorteilhafter Weise ein unabhängiger Antrieb für zwei jeweils mit einer der Abtriebswellen verbundenen Einheiten zur Verfügung gestellt.

Besonders von Vorteil ist dabei, daß die beiden Abtriebswellen abwechselnd nur über eine Maschine oder einen einzigen Elektromotor der Antriebseinrichtung angetrieben werden können, wodurch einerseits wesentlich weniger Bauraum benötigt wird und auch die Herstellkosten gesenkt werden.

Weiter ist von Vorteil, daß der Antrieb der beiden Abtriebswellen über die Antriebswelle mit einer einfachen Steuer- und Regelungstechnik für die Ansteuerung der elektromagnetischen Kupplung realisierbar ist, da lediglich die Bestromung der elektromagnetischen Kupplung zum Umschalten des Kraftflusses zwischen der Antriebswelle und der ersten oder der zweiten Abtriebswelle und ein Betrieb der Antriebseinrichtung eingestellt werden muß.

Durch den erfindungsgemäßen Einsatz der elektromagnetischen Kupplung wird zusätzlich eine kompakte und verschleißarme Bauweise der erfindungsgemäßen Vorrichtung erreicht, welche in Verbindung mit der Einsparung einer zweiten Antriebseinrichtung vorteilhafterweise zu einer weiteren Reduzierung des Bauraumbedarfes und zur Verlängerung der Lebensdauer der Vorrichtung führt.

Die erfindungsgemäße Vorrichtung hat sich als besonders vorteilhaft zum sequentiellen Antreiben von Einrichtungen von Kraftfahrzeugen, und zwar insbesondere bei einem Verteilergetriebe erwiesen. Bei Allradfahrzeugen kann damit auf einfache Weise z.B. eine Lamellensperre und eine Geländegangschaltung mit nur einer Antriebseinrichtung angetrieben werden.

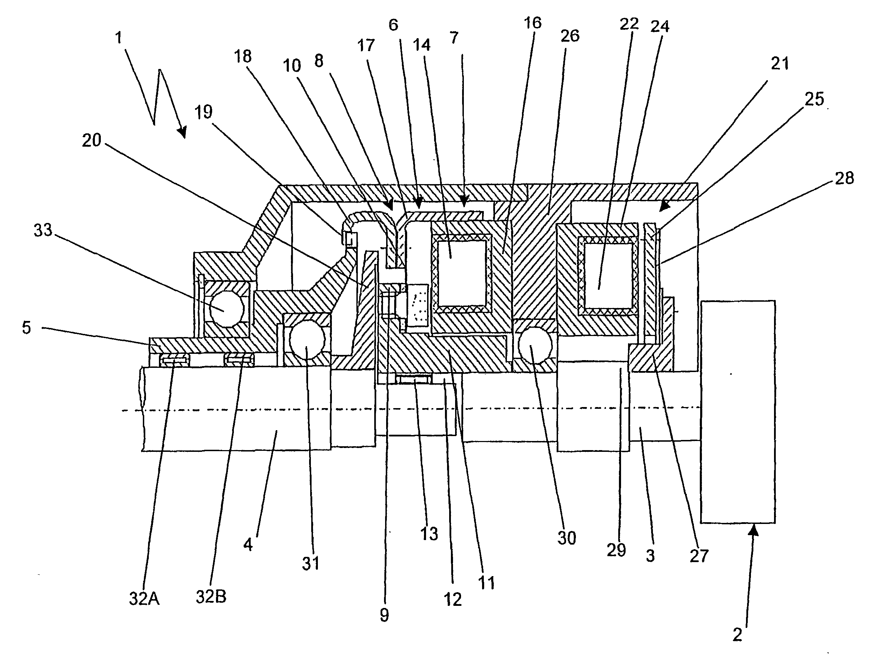

Weitere Vorteile und Weiterbildungen der Erfindung ergeben sich aus den Patentansprüchen und aus dem nachfolgend anhand der Zeichnung prinzipmäßig beschriebenen Ausführungsbeispiel.

Die einzige Figur der Zeichnung zeigt eine Vorrichtung 1 zum Führen eines Momentes, welches von einer mit einer Antriebseinrichtung 2 verbundenen Antriebswelle 3 auf eine erste Abtriebswelle 4 oder eine zweite Abtriebswelle 5 geleitet wird.

Das Moment der Antriebswelle 3 wird in Abhängigkeit einer Ansteuerung einer Umschalteinrichtung 6 jeweils auf eine der beiden Antriebswellen 4, 5 aufgebracht. Die Umschalteinrichtung 6 weist eine elektromagnetische Kupplung 7 auf, mit welcher ein Kraftfluß zur Übertragung des Antriebsmomentes zwischen der Antriebswelle 3 und der ersten oder der zweiten Abtriebswelle 4, 5 herstellbar ist.

Die elektromagnetische Kupplung 7 weist ein axial und rotatorisch beweglich geführtes Koppelelement 8 auf, welches drehfest mit der Antriebswelle 3 verbunden ist und in Abhängigkeit einer Bestromung der elektromagnetischen Kupplung 7 den Kraftfluß zwischen der Antriebswelle 3 und der ersten Abtriebswelle 4 oder der zweiten Abtriebswelle 5 herstellt.

Die Antriebswelle 3 ist im Bereich ihres den Abtriebswellen 4, 5 zugewandten Endes mit einem flanschartigen Bund 9 ausgestaltet, an dem ein vorliegend als Membranfeder ausgebildetes federndes Element 10 des Koppelelementes 8 drehfest befestigt ist.

Im vorliegenden Ausführungsbeispiel ist der flanschartige Bund 9 einstückig mit einem hohlzylindrischen und mit der Antriebswelle 3 fest verbundenen Bauteil 11 ausgebildet, wobei die Verbindung zwischen dem hohlzylindrischen Bauteil 11 und der Antriebswelle 3 im Bereich des den Abtriebswellen 4, 5 abgewandten Endes des hohlzylindrischen Bauteils 11 und dem Bereich des den Abtriebswellen 4, 5 zugewandten Endes der Antriebswelle 3 vorgesehen ist. Das hohlzylindrische Bauteil 11 erstreckt sich in axialer Richtung der Antriebswelle 3 derart, daß die erste Abtriebswelle 4 in eine mittige Bohrung 12 des hohlzylindrischen Bauteils 11 eingreift, wobei zwischen der ersten Abtriebswelle 4 und dem hohlzylindrischen Bauteil 11 ein Wälzlager 13 zur Aufnahme von auf den flanschartigen Bund 9 und das hohlzylindrische Bauteil 11 einwirkenden Radialkräften angeordnet ist.

Die Anordnung bzw. die Ausgestaltung des hohlzylindrischen Bauteils 11 und des Wälzlagers 13 zwischen der ersten Abtriebswelle 4 und dem hohlzylindrischen Bauteil 11 gewährleistet eine exakte Positionierung der Bauteile zueinander sowie eine kompakte Bauweise der gesamten Vorrichtung 1.

Die elektromagnetische Kupplung 7 weist ferner eine eingegossene Spule auf, die in einem ringförmigen Magnetkörper 16 angeordnet ist, der einen U-förmigen Querschnitt aufweist.

Das Koppelelement 8 ist zusätzlich zu dem federnden Element 10 mit einem ringförmigen, im Querschnitt L-förmig ausgeführten Führungselement 17 ausgebildet, welches auf dem Magnetkörper 16 der elektromagnetischen Kupplung 7 rotatorisch sowie in axialer Richtung der Antriebswelle 3 beweglich geführt ist, wobei die Führung des Führungselements 17 auf dem Magnetkörper 16 derart ausgebildet ist, daß eine Rotationsbewegung der Antriebswelle 3 auf das hohlzylindrische Bauteil 11, das federnde Element 10 und auch auf das Führungselement 17 übertragen wird und von diesem ausgeführt werden kann.

An dem Führungselement 17 ist ein ringförmiges, im Querschnitt wenigstens annähernd U-förmig ausgebildetes Übertragungselement 18 befestigt, wobei das Führungselement 17 und das Übertragungselement 18 den Anker der elektromagnetischen Kupplung 7 darstellen. In bestromtem Zustand der elektromagnetischen Kupplung 7 wird das Führungselement 17 und das Übertragungselement 18 in axialer Richtung der Antriebswelle 3 in Richtung der beiden Abtriebswellen 4, 5 entlang der Führung des Magnetkörpers 16 entgegen einer Haltekraft verschoben, die durch eine reversible Verformung des als Blattfeder ausgebildeten federnden Elementes 10 entsteht.

Die zweite Abtriebswelle 5 ist als eine die erste Abtriebswelle 4 umgebende Hohlwelle ausgebildet und an ihrem der Antriebswelle 3 zugewandten Ende mit dem Koppelelement 8 bzw. einer Verzahnung 19 des Übertragungselementes 18 derart in Wirkverbindung bringbar, daß eine drehfeste Verbindung zwischen der Antriebswelle 3 und der zweiten Abtriebswelle 5 in unbestromtem Zustand der elektromagnetischen Kupplung 7 vorliegt. Die Verzahnung 19 des Übertragungselementes 18 ist als eine sich über den gesamten Umfang des Übertragungselementes 18 erstreckende Innenverzahnung ausgebildet und greift in ein Zahnprofil der zweiten Abtriebswelle 5 ein, die an einem der Antriebswelle 3 zugewandten, sich trichterförmig aufweitenden Ende der zweiten Abtriebswelle 5 ausgebildet ist.

Selbstverständlich liegt es im Ermessen des Fachmannes, anstatt der formschlüssigen Verbindung zwischen dem Übertragungselement 18 und der zweiten Abtriebswelle 5 eine kraftschlüssige Verbindung, wie beispielsweise eine reibschlüssige Verbindung über zwei Reibflächen, vorzusehen. Darüber hinaus kann die drehfeste Verbindung anstatt der beschriebenen Verzahnung auch über eine andere geeignete formschlüssige Verbindungsart ausgebildet werden.

Die erste Abtriebswelle 4 ist im Bereich ihres der Antriebswelle 3 zugewandten Endes mit einem Bund 20 versehen, mit welchem im bestromten Zustand der elektromagnetischen Kupplung 7 das Koppelelement 8 bzw. das Übertragungselement 18 derart kontaktiert, daß zwischen der Antriebswelle 3 und der ersten Abtriebswelle 4 eine drehfeste Verbindung vorliegt und das über die Antriebswelle 3 eingeleitete Antriebsmoment über das Koppelelement 8 auf die erste Abtriebswelle 4 übertragen wird.

Der Bund 20 der ersten Abtriebswelle 4 ist gemäß der Figur als ein separates flanschartiges Bauteil, welches über einen Preßsitz mit der ersten Abtriebswelle 4 verbunden ist, ausgeführt. Es liegt jedoch selbstverständlich im Ermessen des Fachmannes, den Bund 20 einstückig mit der Abtriebswelle 4 auszubilden, sowie eine andere kraft- oder formschlüssige, auf jeden Fall drehfeste Verbindung zwischen der ersten Abtriebswelle 4 und dem Bund 20 vorzusehen.

In bestromtem Zustand der elektromagnetischen Kupplung 7 wird das Koppelelement 8 bzw. das Führungselement 17 und das Übertragungselement 18 von dem durch die eingegossene Spule 14 der elektromagnetischen Kupplung 7 erzeugten elektrischen Feld in axialer Richtung auf den Bund 20 gedrückt, wobei die Verzahnung 19 des Übertragungselementes aus dem Eingriff mit dem Zahnprofil der zweiten Abtriebswelle 5 gebracht wird. Damit ist im bestromten Zustand der elektromagnetischen Kupplung 7 die Verbindung zwischen der Antriebswelle 3 und der zweiten Abtriebswelle 5 gelöst und ein Reibschluß zwischen dem Übertragungselement 18 und dem Bund 20 hergestellt, so daß ein Kraftfluß zwischen der Antriebswelle 3 und der ersten Abtriebswelle 4 über das Koppelelement 8 vorliegt.

In unbestromtem Zustand der elektromagnetischen Kupplung 7 wird das Übertragungselement 18 und das Führungselement 17 durch die dem federnden Element 10 im bestromten Zustand der elektromagnetischen Kupplung 7 zugeführte potentielle Energie in axialer Richtung der Antriebswelle 3 von dem Bund 20 zu der Spule 14 der elektromagnetischen Kupplung 7 hin verschoben. Dabei wird die reibschlüssige Verbindung zwischen dem Übertragungselement 18 und dem Bund 20 gelöst, und die Verzahnung 19 des Übertragungselementes 18 steht wieder in Eingriff mit dem Zahnprofil der zweiten Abtriebswelle 5.

Im Bereich der Antriebswelle 3 ist zur Entlastung der Antriebseinrichtung 2 eine elektromagnetische Bremse 21 vorgesehen, mit welcher die Antriebswelle 3 in Abhängigkeit einer Bestromung der elektromagnetischen Bremse 21 in einer Position drehfest gehalten wird. Die elektromagnetische Bremse 21 weist eine eingegossene Spule 22 auf, wobei die Spule 22 in einem ringförmigen Magnetkörper 24 angeordnet ist, der mit einem U-förmigen Querschnitt ausgebildet ist.

Darüber hinaus umfaßt die elektromagnetische Bremse 21 ein mit der Antriebswelle 3 drehfest und in axialer Richtung der Antriebswelle 3 bewegliches Bremselement 25, welches im bestromten Zustand der elektromagnetischen Bremse 21 einen Kraftfluß zwischen der Antriebswelle 3 und der elektromagnetischen Bremse 21 ausbildet. Im unbestromten Zustand der elektromagnetischen Bremse 21 ist das Bremselement 25 in axialer Richtung der Antriebswelle 3 beabstandet zu der Spule 22 und dem Magnetkörper 24 der elektromagnetischen Bremse 21 angeordnet. Aufgrund des Kontaktes zwischen dem Bremselement 25 und dem Magnetkörper 24 der elektromagnetischen Bremse 21 und einer Befestigung des Magnetkörpers 24 in einem Gehäuse 26 der Vorrichtung 1 wird die Antriebswelle 3 über die elektromagnetische Bremse 21 in einer gewünschten stehenden Position mit anliegendem Moment gehalten, ohne daß von der Antriebseinrichtung ein Antriebsmoment bzw. ein Gegenmoment aufgebracht werden muß.

Das anliegende Moment kann beispielsweise von mit der ersten Abtriebswelle 4 oder der zweiten Abtriebswelle 5 verbundenen Einrichtungen eines Kraftfahrzeuggetriebes auf die Antriebswelle 3 einwirken. Für den Fall, daß von der Antriebseinrichtung 2 ein dem an den beiden Abtriebswellen 4, 5 oder an einer Abtriebswelle anliegenden Moment entgegenwirkendes Gegenmoment aufgebracht werden soll, muß ein Motor, wie beispielsweise ein Elektromotor, der Antriebseinrichtung 2 permanent bestromt werden. Dies ist jedoch unerwünscht, da zur Aufrechterhaltung des Gegenmomentes eine permanente Bestromung des Elektromotors notwendig ist, die einen hohen Energieeinsatz erfordert und eine unerwünschte Erwärmung der Antriebseinheit 2 zur Folge hätte. Dies wird durch den Einsatz der elektromagnetischen Bremse 21 erfolgreich vermieden.

Um die reibschlüssige Verbindung zwischen dem Bremselement 25 und dem Magnetkörper 24 der elektromagnetischen Bremse 21 beim Übergang vom bestromten Zustand in den unbestromten Zustand der elektromagnetischen Bremse 21 sicher zu lösen, ist zwischen einem Wellenflansch 27 der Antriebswelle 3 und dem Bremselement 25 ein weiteres federndes Element 28 vorgesehen, welches aufgrund der axialen Verschiebung des Bremselementes 25 im bestromten Zustand der elektromagnetischen Kupplung 21 eine reversible Verformung erfährt und potentielle Federenergie speichert. Die gespeicherte Energie führt beim Übergang in einen unbestromten Zustand der elektromagnetischen Bremse 21 zu einer axialen Verschiebung des Bremselementes 25 von dem Magnetkörper 24 der elektromagnetischen Bremse 21 weg in eine Ruheposition des Bremselementes 25. Der Wellenflansch 27 ist fest mit der Antriebswelle 3 über einen Preßsitz verbunden und über einen Absatz 29 der Antriebswelle 3 in axialer Richtung der Antriebswelle 3 gehalten.

Die elektromagnetische Kupplung 7 ist ebenso wie die elektromagnetische Bremse 21 über ihre Halterung 16 in dem Gehäuse 26 fest und unbeweglich angeordnet. Weiter sind die elektromagnetische Kupplung 7 und die elektromagnetische Bremse 21 grundsätzlich von gleichem Aufbau, wobei die erzeugten elektromagnetischen Felder unterschiedliche Auswirkungen auf die sie umgebenden Bauteile haben. Das Feld der elektromagnetischen Kupplung 7 bewirkt eine Abstoßung des Koppelelementes 8, wohingegen das Feld der elektromagnetischen Bremse 21 eine Anziehung des Bremselementes 25, das den Anker der elektromagnetischen Bremse 21 darstellt, bewirkt. Die Magnetkörper 16, 24 sind aus Eisen hergestellt, um das elektromagnetische Feld optimal bilden zu können.

Die Antriebswelle 3 ist in dem Gehäuse 26 über ein Kugellager 30 gelagert, welches auf die Antriebswelle 3 einwirkende Axialkräfte aufnimmt. Die zweite Abtriebswelle 5 ist ebenfalls über ein Kugellager 33 in dem Gehäuse 26 drehbar gelagert, wobei die erste Abtriebswelle 4 über das Wälzlager 13 in dem hohlzylindrischen Bauteil 11 und über zwei weitere Wälzlager 32A, 32B sowie ein zusätzliches Kugellager 31 in der zweiten Abtriebswelle 5 drehbar gelagert ist.

Die vorbeschriebene Vorrichtung 1 wird zum sequentiellen Antreiben von Einrichtungen eines Kraftfahrzeuges verwendet, wobei die sequentiell anzutreibenden Einrichtungen hier einerseits eine Lamellensperre zur Sperrung eines Antriebstranges eines Hinterradantriebes und eines Antriebsstranges einer Vorderradantriebes und anderseits eine Geländegangschaltung eines Verteilergetriebes darstellen.

### Bezugszeichen

- 1: Vorrichtung
- 2: Antriebseinrichtung
- 3: Antriebswelle
- 4: erste Abtriebswelle
- 5: zweite Abtriebswelle
- 6: Umschalteinrichtung
- 7: elektromagnetische Kupplung
- 8: Koppelelement
- 9: flanschartiger Bund
- 10: federndes Element
- 11: hohlzylindrisches Bauteil
- 12: mittige Bohrung
- 13: Wälzlager
- 14: eingegossene Spule der elektromagnetischen Kupplung
- 16: Magnetkörper der elektromagnetischen Kupplung
- 17: Führungselement
- 18: Übertragungselement
- 19: Verzahnung des Übertragungselementes
- 20: Bund
- 21: elektromagnetische Bremse
- 22: eingegossene Spule der elektromagnetischen Bremse
- 24: Magnetkörper der elektrischen Bremse
- 25: Bremselement
- 26: Gehäuse
- 27: Wellenflansch der Antriebswelle
- 28: federndes Element
- 29: Absatz der Antriebswelle
- 30: Kugellager
- 31: Kugellager
- 32A, 32A: Wälzlager
- 33: Kugellager

## Patentansprüche

1. Vorrichtung zum Führen eines Momentes einer mit einer Antriebseinrichtung (2) verbundenen Antriebswelle (3) auf eine erste oder eine zweite Abtriebswelle (4, 5), wobei das Moment der Antriebswelle (3) in Abhängigkeit einer Ansteuerung einer Umschalteinrichtung (6) jeweils auf eine der beiden Abtriebswellen (4, 5) aufbringbar ist und die Umschalteinrichtung (6) eine elektromagnetische Kupplung (7) aufweist, mit welcher ein Kraftfluß zwischen der Antriebswelle (3) und der ersten oder der zweiten Abtriebswelle (4 oder 5) herstellbar ist, wobei die elektromagnetische Kupplung (7) ein axial und rotatorisch beweglich geführtes Koppelelement (8) aufweist, welches drehfest mit der Antriebswelle (3) verbunden ist und in Abhangigkeit einer Bestromung der elektromagnetischen Kupplung (7) den Kraftfluß zwischen der Antriebswelle (3) und der ersten oder der zweiten Abtriebswelle (4 oder 5) herstellt, wobei die zweite Abtriebswelle (5) als eine die erste Abtriebswelle (4) umgebende Hohlwelle ausgebildet ist.

2. Vorrichtung nach Anspruch 1, **dadurch gekennzeichnet, daß** die Antriebswelle (3) im Bereich ihres den Abtriebswellen (4, 5) zugewandten Endes einen flanschartigen Bund (9) aufweist, an dem ein federndes Element (10) des Koppelelementes (8) drehfest befestigt ist.

3. Vorrichtung nach Anspruch 1 oder 2, **dadurch gekennzeichnet, daß** die zweite Abtriebswelle (5) als eine die erste Abtriebswelle (4) umgebende Hohlwelle ausgebildet ist und an ihrem der Antriebswelle (3) zugewandten Ende mit dem Koppelelement (8) derart in Wirkverbindung bringbar ist, daß eine drehfeste Verbindung zwischen der Antriebswelle (3) und der zweiten Abtriebswelle (5) in unbestromtem Zustand der elektromagnetischen Kupplung (7) vorliegt.

4. Vorrichtung nach einem der Ansprüche 1 bis 3, **dadurch gekennzeichnet, daß** die erste Abtriebswelle (4) im Bereich ihres der Antriebswelle (3) zugewandten Endes einen Bund (20) aufweist, mit welchem im bestromten Zustand der elektromagnetischen Kupplung (7) das Koppelelement (8) derart kontaktiert, daß zwischen der Antriebswelle (3) und der ersten Abtriebswelle (4) eine drehfeste Verbindung vorliegt.

5. Vorrichtung nach einem der Ansprüche 1 bis 4, **dadurch gekennzeichnet, daß** im bestromten Zustand der elektromagnetischen Kupplung (7) die Verbindung zwischen der Antriebswelle (3) und der zweiten Abtriebswelle (5) gelöst ist.

6. Vorrichtung nach einem der Ansprüche 1 bis 5, **dadurch gekennzeichnet, daß** im unbestromten Zustand der elektromagnetischen Kupplung (7) die Verbindung zwischen der Antriebswelle (3) und der ersten Abtriebswelle (4) gelöst ist.

7. Vorrichtung nach einem der Ansprüche 3 bis 6, **dadurch gekennzeichnet, daß** zur Ausbildung der drehfesten Verbindung zwischen der Antriebswelle (3) und der ersten oder der zweiten Abtriebswelle (4 oder 5) jeweils eine formschlüssige oder kraftschlüssige Verbindung vorgesehen ist.

8. Vorrichtung nach einem der Ansprüche 1 bis 7, **dadurch gekennzeichnet, daß** zur Entlastung der Antriebseinrichtung (2) im Bereich der Antriebswelle (3) eine elektromagnetische Bremse (21) vorgesehen ist, mit welcher die Antriebswelle (3) in Abhängigkeit einer Bestromung der elektromagnetischen Bremse (21) in einer Position drehfest gehalten wird.

9. Vorrichtung nach Anspruch 8, **dadurch gekennzeichnet, daß** die elektromagnetische Bremse (21) ein mit der Antriebswelle (3) drehfest und in axialer Richtung der Antriebswelle (3) bewegliches Bremselement (25) aufweist, welches im bestromten Zustand der elektromagnetischen Bremse (21) einen Kraftfluß zwischen der Antriebswelle (3) und der elektromagnetischen Bremse (21) ausbildet.

10. Vorrichtung nach einem der Ansprüche 8 oder 9, **dadurch gekennzeichnet, daß** die elektromagnetische Bremse (21) und die elektromagnetische Kupplung (7) fest in einem Gehäuse angeordnet sind.

11. Vorrichtung nach einem der Ansprüche 1 bis 10, **gekennzeichnet durch** ihre Verwendung zum sequentiellen Antreiben von Einrichtungen eines Kraftfahrzeuggetriebes.

12. Vorrichtung nach Anspruch 11, **dadurch gekennzeichnet, daß** die sequentiell anzutreibenden Einrichtungen eine Lamellensperre und eine Geländegangschaltung bei einem Verteilergetriebe darstellen.

## Claims

1. Device for transmitting a torque of a drive shaft (3) connected to a drive unit (2) to a first or a second output shaft (4, 5), whereby the torque of the drive shaft (3) can be applied respectively to one of the two output shafts (4, 5) depending on activation of a changeover system (6), and the changeover system (6) has an electromagnetic clutch (7) by means of which a magnetic flux can be generated between the drive shaft (3) and the first or the second output shaft (4 or 5), the electromagnetic clutch (7) having a coupling element (8) guided in axial and rotary displacement which is joined to the drive shaft (3) so as to be fixed therewith in rotation and the magnetic flux is generated between the drive shaft (3) and the first or the second output shaft (4 or 5) depending on whether the electromagnetic clutch (7) is supplied with power, said second output shaft (5) being provided in the form of a hollow shaft surrounding the first output shaft (4).

2. Device as claimed in claim 1, **characterised in that** the drive shaft (3) has a flange-type collar (9) in the region of its end facing the output shafts (4, 5), to which a resilient element (10) of the coupling element (8) is affixed so as to rotate therewith.

3. Device as claimed in claim 1 or 2, **characterised in that** the second output shaft (5) is a hollow shaft surrounding the first output shaft (4) and can be actively connected to the coupling element (8) by its end facing the drive shaft (3) so that the drive shaft (3) and the second output shaft (5) are joined to one another in rotation when the electromagnetic clutch (7) is in the non-powered state.

4. Device as claimed in one of claims 1 to 3, **characterised in that** the first output shaft (4) has a collar (20) in the region of its end facing the drive shaft (3), by means of which a contact is established with the coupling element (8) when the electromagnetic clutch (7) is supplied with power so that the drive shaft (3) and the first output shaft (4) are joined to one another in rotation.

5. Device as claimed in one of claims 1 to 4, **characterised in that** when the electromagnetic clutch (7) is supplied with power, the connection between the drive shaft (3) and the second output shaft (5) is released.

6. Device as claimed in one of claims 1 to 5, **characterised in that** when the electromagnetic clutch (7) is in the non-powered state, the connection between the drive shaft (3) and the first output shaft (4) is released.

7. Device as claimed in one of claims 3 to 6, **characterised in that** a positive or non-positive connection is provided as a means of connecting the drive shaft (3) so that it rotates with the first or the second output shaft (4 or 5).

8. Device as claimed in one of claims 1 to 7, **characterised in that** in order to remove the load from the drive unit (2), an electromagnetic brake (21) is provided in the region of the drive shaft (3), by means of which the drive shaft (3) is held in a fixed position prevented from rotating, depending on whether the electromagnetic brake (21) is supplied with power.

9. Device as claimed in claim 8, **characterised in that** the electromagnetic brake (21) has a brake element (25) fixedly joined to the drive shaft (3) so as to rotate therewith and displaceable in the axial direction of the drive shaft (3), which creates a magnetic flux between the drive shaft (3) and the electromagnetic brake (21) when the electromagnetic brake (21) is supplied with power.

10. Device as claimed in one of claims 8 or 9, **characterised in that** the electromagnetic brake (21) and the electromagnetic clutch (7) are fixedly mounted in a housing.

11. Device as claimed in one of claims 1 to 10, **characterised in that** it is used to drive units of an automotive gear in sequence.

12. Device as claimed in claim 11, **characterised in that** the units to be sequentially driven are a multi-disc lock and an off-road gear shift for a transfer transmission.

## Revendications

1. Dispositif pour transmettre un couple d'un arbre d'entrée (3) relié à un dispositif d'entraînement (2) à un premier ou à un deuxième arbre de sortie (4, 5), le couple de l'arbre d'entrée (3) pouvant être appliqué, en fonction d'un pilotage d'un dispositif de commutation (6), à chaque fois à l'un des deux arbres de sortie (4, 5), et le dispositif de commutation (6) comportant un embrayage électromagnétique (7) avec lequel un flux de force peut être établi entre l'arbre d'entrée (3) et le premier ou le deuxième arbre de sortie (4 ou 5), l'embrayage électromagnétique (7) possédant un élément d'accouplement (8) guidé mobile axialement et en rotation, qui est relié solidairement en rotation à l'arbre d'entrée (3) et qui établit le flux de force entre l'arbre d'entrée (3) et le premier ou le deuxième arbre de sortie (4 ou 5) en fonction d'une alimentation en courant de l'embrayage électromagnétique (7), le deuxième arbre de sortie (5) étant constitué par un arbre creux qui entoure le premier arbre de sortie (4).

2. Dispositif selon la revendication 1, **caractérisé en ce que** l'arbre d'entrée (3) comporte, dans la région de son extrémité dirigée vers les arbres de sortie (4, 5), une embase (9) en forme de collerette à laquelle est fixée solidairement en rotation un élément élastique (10) de l'élément d'accouplement (8).

3. Dispositif selon la revendication 1 ou 2, **caractérisé en ce que** le deuxième arbre de sortie (5) est constitué par un arbre creux entourant le premier arbre de sortie (4) et peut être mis en liaison effective avec l'élément d'accouplement (8) à son extrémité dirigée vers l'arbre d'entrée (3) de telle manière qu'il existe une liaison solidaire en rotation entre l'arbre d'entrée (3) et le deuxième arbre de sortie (5) à l'état non alimenté en courant de l'embrayage électromagnétique (7).

4. Dispositif selon l'une des revendications 1 à 3, **caractérisé en ce que** le premier arbre de sortie (4) comporte, dans la région de son extrémité dirigée vers l'arbre d'entrée (3), une embase (20) avec laquelle, dans l'état alimenté en courant de l'embrayage électromagnétique (7), il est en contact avec l'élément d'accouplement (8) de telle manière qu'il existe une liaison solidaire en rotation entre l'arbre d'entrée (3) et le premier arbre de sortie (4).

5. Dispositif selon l'une des revendications 1 à 4, **caractérisé en ce que**, dans l'état alimenté en courant de l'embrayage électromagnétique (7), la liaison entre l'arbre d'entrée (3) et le deuxième arbre de sortie (5) est supprimée.

6. Dispositif selon l'une des revendications 1 à 5, **caractérisé en ce que**, dans l'état non alimenté en courant de l'embrayage électromagnétique (7), la liaison entre l'arbre d'entrée (3) et le premier arbre de sortie (4) est supprimée.

7. Dispositif selon l'une des revendications 3 à 6, **caractérisé en ce que**, pour la réalisation de la liaison solidaire en rotation entre l'arbre d'entrée (3) et le premier ou le deuxième arbre de sortie (4 ou 5) il est prévu à chaque fois une liaison par complémentarité de forme ou par action de force.

8. Dispositif selon l'une des revendications 1 à 7, **caractérisé en ce que**, pour soulager le dispositif d'entraînement (2), il est prévu, dans la région de l'arbre d'entrée (3), un frein électromagnétique (21) avec lequel l'arbre d'entrée (3) est maintenu bloqué en rotation dans une position, en fonction d'une alimentation en courant du frein électromagnétique (21).

9. Dispositif selon la revendication 8, **caractérisé en ce que** le frein électromagnétique (21) comporte un élément de frein (25) solidaire de l'arbre d'entrée (3) en rotation et mobile dans la direction axiale de l'arbre d'entrée (3) et qui, dans l'état alimenté en courant du frein électromagnétique (21), crée un flux de force entre l'arbre d'entrée (3) et le frein électromagnétique (21).

10. Dispositif selon l'une des revendications 8 ou 9, **caractérisé en ce que** le frein électromagnétique (21) et l'embrayage électromagnétique (7) sont disposés rigidement dans un boîtier.

11. Dispositif selon l'une des revendications 1 à 10, **caractérisé par** son utilisation pour l'entraînement séquentiel de dispositifs d'une transmission d'un véhicule automobile.

12. Dispositif selon la revendication 11, **caractérisé en ce que** les dispositifs à entraîner séquentiellement représentent un blocage à disques et un enclenchement de vitesse tout terrain dans une boîte transfert.
